# EUROPEAN PATENT APPLICATION

(11) **EP 4 603 557 A1**
(43) Date of publication of application: **20.08.2025**
(21) Application number: 24382165.9
(22) Date of filing: 16.02.2024
(51) Int. Cl.: C09J 7/21

(54) **SELF-ADHESIVE BUNDLING BAND AND METHOD FOR MANUFACTURE OF SAME**

(71) Applicant: Saica Flexible, SAU, 50016 Zaragoza Zaragoza (ES)
(72) Inventor: Aznar, Leon Ibon, 50016 ZARAGOZA (ES); Mayall, Paul, Flintshire, CH5 2UA (GB); Castrillon, García Mariana, 50016 ZARAGOZA (ES); Martinez Abadia, Marta, 50016 ZARAGOZA (ES); Val Campos, Francisco Javier, 50016 ZARAGOZA (ES)
(74) Representative: Espiell Gomez, Ignacio

(57) **Abstract**

The invention relates to a self-adhesive bundling band comprising a paper sheet with additives (1') rendering it moisture resistant, on which on one of its sides inks (4) are applied, and on these a release overprint varnish (5') is applied, while on the side opposite the previous one there is an adhesive layer (2), wherein the adhesive layer (2) is applied on the assembly formed by the paper sheet with additives (1'), the inks (4) and the overprint varnish (5'), all of which can be perforated. The method comprises the phases of:
- printing (11) with inks (4),
- overprinting (12) by applying a release overprint varnish (5') on the inks (4),
- applying adhesive (10), forming an adhesive layer (2), free of any liner,
- cutting (13) into bands.

Self-adhesive, highly mechanical and moisture resistant, recyclable linerless bundling bands are obtained.

## Description

### Object of the invention

The object of the present invention relates to a self-adhesive bundling band made of paper having a high mechanical strength as well as a high resistance to moisture, free of liners, which is a coating or a film/paper backing, which can be applied manually or automatically without prior cutting and can be converted back to pulp during the paper recycling process by means of standard recycling mills. The term liner is known and used in the sector in reference to a film or paper backing, as indicated above.

The present invention is characterized by the materials used, the relative arrangement between same, as well as the method for manufacture.

Another object of the present invention relates to the method for manufacture of the self-adhesive band object of the invention.

Therefore, the present invention is circumscribed within the field of adhesive tapes on the one hand and means used as product bundling bands, such as, for example, fruit and vegetable products, cleaning products and beverages, among others.

### Background of the invention

The following documents relating to self-adhesive bundling bands are known in the prior art:

Document JP2023050801 A describes a reel of self-adhesive adhesive tape obtained by winding an adhesive tape element having a tape substrate and an adhesive layer provided on one side of the tape substrate directly or by means of another roll layer comprising a filler in the adhesive layer.

In the adhesive tape disclosed in this invention it is recognized that the substrate may be paper; it does not mention that on the opposite side of the face, where the adhesive is applied, the paper is already perforated and has the print and release lacquer applied.

Document JP2007117534 A discloses a roll of adhesive tape comprising a substrate or base material where an adhesive layer is applied, where the base material is paper. It does not mention anything about the printing process or about the layer of lacquer applied.

Document EP20710001 A1 discloses a pressure sensitive adhesive tape.

An adhesive tape having pre-cut areas for easy separation is already disclosed in US201625787860A1.

In the prior art of the process for manufacture of bundling bands made from paper with a liner, the adhesive was first applied by means of a hot-melt process, rotogravure with solvent-based or water-based adhesives or any other adhesive technique, applying the liner in the same process on one side of the paper. In a second step, the master reels were printed, then they were subjected to a process of applying overprint varnishes on the printed side, while a pre-cutting was performed to facilitate its subsequent use; finally, the process was completed by cutting the bands to the desired width and winding said bands in final rolls where the roll could be formed and continuity given to the material as a result of the liner.

One of the difficulties of the bundling bands of the prior art is the fact that the paper does not have sufficient mechanical properties or resistance to moisture, so their scope of application is very limited.

Moreover, bundling bands with a liner of the prior art, because they do have a liner, generate additional waste that is not part of the packaging. Depending on their composition, such bundling bands of paper with a liner can sometimes be converted back to pulp in the standard paper and cardboard recycling process, but they cannot be manufactured in a linerless manner.

Additionally, linerless bundling belts of the prior art, because of their composition, being sized or having additives incorporated to improve the cohesion of the paper fibers, are not recyclable in the standard paper and cardboard recycling process, i.e., they cannot be converted back to pulp in the standard paper and cardboard recycling process

Furthermore, bundling bands of the prior art are not easily separated manually due to the presence of the liner, as well as the high cohesion of the paper fibers, achieved through sizing and additives.

Another difficulty added to bundling bands of the prior art is a formulation that is not sufficiently balanced to allow adhesion and subsequent release of the bands on the reel, such that sufficient adhesion force is achieved to hold the objects or products in a bundled together, but low enough to allow unwinding of the bands on the reel without causing the printed ink to peel/rip off. It is for this reason that the presence of the liner is necessary.

Therefore, the object of the present invention is to overcome the drawbacks of the prior art, i.e., the lack of mechanical strength as well as resistance to moisture, the fact that the bands cannot be recycled, the difficulties in separation and a formulation that is sufficiently balanced to allow the unwinding of the bands on the reel without loss of the applied ink, and moreover to allow keeping an assembly of objects bundled together, by developing a self-adhesive bundling band as described below and the essential nature of which is described in claim 1.

### Description of the invention

The object of the present invention is described in its essential nature in the independent claim and the various embodiments are described in the dependent claims.

For the development of the bundling band made from linerless paper, the method for manufacture described above would not be possible and a new process had to be designed to work in a linerless manner. This new process can be carried out in a completely linerless manner; for this it is crucial to print the paper first, applying the release coating in line and being able to make a perforation, also in line in the same step and before the application of the adhesive. The adhesive is applied in a second step, where the paper may or may not already be perforated with the print and with the release lacquer. This is important to ensure that when the adhesive is applied and the reel is wound with adhesive for the first time, the adhesive is in contact with the release lacquer and there is no blockage in the reel. It is important to note that in this case the application of the adhesive is done on paper that may be perforated, with the loss of strength and the added difficulty of working with a weakened material. The last step is the cutting process, where the bands are cut to the required width, as in the original process.

The object of the present invention is a self-adhesive bundling band comprising a 100% paper material, which is a paper with additives rendering it moisture resistant, also known as wet strength paper since they use additives that confer high mechanical and moisture resistance without using/adding waterproof additives in the paper such as paper sizing agents.

It is a linerless self-adhesive band that is repulpable, i.e., it can be converted back to pulp, unlike linerless adhesive tape which is not repulpable since it is based on a sized parchment/fiber paper, whereas the specific design of the application of the adhesive in the invention of the linerless self-adhesive band with unsized paper is repulpable. The adhesive band allows water to enter the core of the paper during the paper recycling process.

Self-adhesive bands can be separated from each other manually as a result of the pre-perforation design, which also keeps the bands together on the reel during the conversion process.

As a result of a specific and balanced formulation of adhesive and release lacquer it is possible to obtain an adhesion force on the product to be bundled and on the back of the band itself that is high enough to bundle the product, but low enough to easily unwind the band on the reel without tearing off the ink. The peeling force of the side of the band with adhesive against the printed side of the band is preferably < 1 N/25 mm and more preferably < 0.5 N/25 mm, and yet the adhesion of the side with the adhesive against the printed side of the band allows the two parts of the band to remain attached without separating, in an upright position, while a weight of 500 g hangs from one of them, preferably for at least 2 minutes and more preferably for at least 5 minutes.

As a result of modifying the current process for production of self-adhesive bands by adjusting elements in the production line and changing the flows and order in the process, it is possible to make the line more versatile, while at the same time allowing the standard process for production of self-adhesive bands.

Overprint varnishes (OPVs) are coatings that are applied to an already printed sheet or band. The main reasons for applying an OPV are gloss enhancement, resistance to smudges, resistance to edge fusing, resistance to abrasion or scratching and resistance to discoloration due to absorption of impurities in the environment.

Unless otherwise indicated, all technical and scientific elements used in the present specification have the meaning normally understood by a person skilled in the art to which this invention pertains. In the practice of the present invention, methods and materials similar or equivalent to those described herein may be used.

Throughout the description and the claims, the word "comprises" and variants thereof are not intended to exclude other technical features, additives, components or steps. To those skilled in the art, other objects, advantages and features of the invention will be apparent in part from the description and in part from the practice of the invention.

### Brief description of the figures

To complement the description being made and in order to aid to better understand the features of the invention, in accordance with a preferred practical embodiment thereof, a set of drawings is attached as an integral part of said description, wherein the following is depicted with an illustrative and non-limiting character.
Figure 1 shows a schematic depiction of the steps of the prior art method for manufacture.
Figure 2 shows a schematic depiction of the steps of the method for manufacture of the self-adhesive bundling band object of the invention.

### Preferred embodiment of the invention

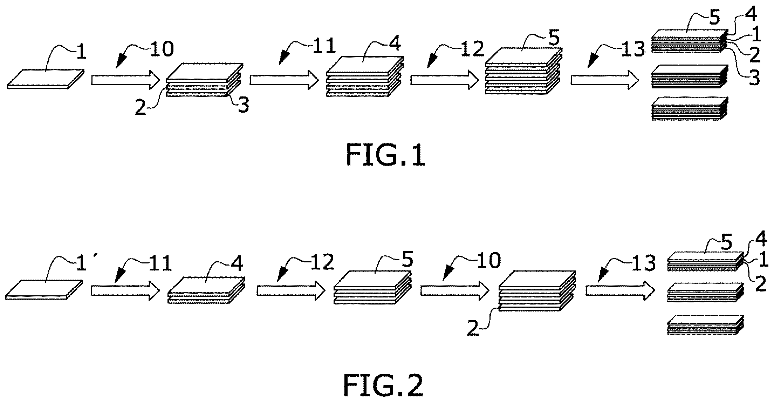

Figure 1 shows the method for manufacture of the self-adhesive bundling bands of the prior art, where, as can be seen, the starting point is a paper sheet (1) to which an adhesive (2) is applied on one of its sides together with a liner (3). The adhesive can be applied by means of a hot-melt process, rotogravure with solvent-based or water-based adhesives or any other adhesive technique (10), the adhesive being interposed between the paper (1) and the liner (3).

Then, by means of a printing step (11), inks (4) are applied on the free side of the paper (1), then a release overprint varnish (5) can be applied on this printed side by means of the same printing technique or a different one, which allows protecting the print to maintain the quality thereof. At the same time, the assembly is subjected to a pre-cutting to make the dispensing easier, and finally it is cut (13) into bands with a desired width, as well as the winding of the bands into final daughter reels where the bands are kept in roll form as a result of the liner.

Therefore, the self-adhesive bundling band of the prior art comprises the following elements in the arrangement indicated below: a paper sheet (1) on which on one side an adhesive layer (2) is applied together with a liner (3) arranged on the adhesive layer (2), on the other side of the paper sheet (1) inks (4) are applied and on these an overprint varnish (5) which protects the printing may have been applied.

Now, to make a self-adhesive bundling band made of linerless paper, it is not possible to do so as previously indicated in Figure 1, and it is necessary to develop a new method for manufacture.

This new method for manufacture shown in Figure 2 comprises the following steps:
- Printing (11) on a 100% paper material with additives (1') on one of its sides with inks (4).
- Overprinting (12) with the same or a different printing technique of the inks, in a continuous or additional step, applying an overprint varnish (5') on the side on which the printing with inks (4) has taken place, at the same time that the overprinting with varnishes is carried out, where perforation can be made in order to facilitate a later dispensing.
- Applying adhesive (10) forming an adhesive layer (2) on the free side of the paper with additives (1'), where this adhesive layer (2) lacks any liner and is applied on the previous assembly, which may be perforated. The adhesive can be applied by means of hot-melt, rotogravure with solvent-based or water-based adhesive or any other adhesive technique.
- Cutting (13) into bands with a desired width, as well as the winding of the bands into final reels where they are kept in rolls as a result of the perforation pattern leaving attachment bridges between the bands and does not allow the bands to separate or break under the tension applied in the process.

Therefore, the self-adhesive bundling band object of the invention comprises the following elements in the arrangement indicated below: a paper sheet with additives (1') on which on one of its sides inks (4) are applied, and on these an overprint varnish (5') is applied, while on the side opposite the previous one there is an adhesive layer (2), where the adhesive layer (2) is applied on the assembly formed by the paper sheet with additives (1'), the inks (4) and the pre-cut overprint varnish (5').

The release printed varnish (5') can be of the polyurethane, nitrocellulose, styrene acrylic silicone, phenoxy ethyl acrylate, trimethylolpropane triacrylate, polyester or epoxy acrylate type, where the type of release coating used is not limiting.

The adhesive layer (2) can be of the acrylic, polyurethane type, styrene-butadiene, styrene-isoprene, butyl, nitrile rubbers, silicone resins, but is not limited to adhesives of this type.

Self-adhesive bundling with high mechanical and moisture resistant, recyclable and without liner layer on the adhesive side, are obtained. The bonding force and the unwindability of the daugther reel are balanced, such that the peeling force of the side of the band with adhesive against the printed side of the band is preferably < 1 N/25 mm and more preferably < 0.5 N/25 mm, and yet the adhesion of the side with the adhesive against the printed side of the band allows the two parts of the band to remain attached without separating, in an upright position, while a weight of 500 g hangs from one of them, preferably for at least 2 minutes and more preferably for at least 5 minutes.

Having sufficiently described the nature of the present invention as well as the manner of putting it into practice, it is hereby stated that, within its essential nature, other embodiments differing in detail from the one indicated by way of example may be put into practice, and the protection claimed will also apply to same, provided that it does not alter, change or modify its fundamental principle.

## Claims

**1.** A self-adhesive bundling band, **characterized in that** it comprises a 100% paper sheet with additives (1') rendering it moisture resistant, on which on one of its sides inks (4) are applied, and on these a release overprint varnish (5') is applied, while on the side opposite the previous one there is an adhesive layer (2), being applied by means of hot-melt, rotogravure with solvent-based or water-based adhesive or any other adhesive technique, wherein the adhesive layer (2) is applied on the assembly formed by the 100% paper sheet with additives (1'), the inks (4) and the anti-adherent overprint varnish (5').

**2.** The self-adhesive bundling band according to claim 1, **characterized in that** the anti-adherent print varnish (5') is of the polyurethane, nitrocellulose, silicone, styrene acrylic, phenoxy ethyl acrylate, trimethylolpropane triacrylate, polyester or epoxy acrylate type.

**3.** The self-adhesive bundling band according to claim 1, **characterized in that** the adhesive layer (2) is of the acrylic or polyurethane type, or styrene-butadiene, styrene-isoprene, butyl or nitrile rubbers, or silicone resins.

**4.** A method for manufacture of the self-adhesive bundling band according to any of the preceding claims, **characterized in that** it comprises the following steps:
- printing (11) on a paper with additives (1') on one of its sides with inks (4),
- overprinting (12) by applying an overprint varnish (5') on the side on which the printing with inks (4) has taken place,
- applying adhesive (10) by means of hot-melt, rotogravure with solvent-based or water-based adhesive, or any other adhesive technique, forming an adhesive layer (2) on the free side of the paper with additives (1'), wherein this adhesive layer (2) lacks any liner and is applied on the previous assembly,
- cutting (13) into bands with a desired width, as well as the winding of the bands into final rolls wherein the bands are kept in roll form because the perforation pattern leaves attachment bridges between the bands and does not allow the bands to separate under the tension applied in the process.

**4.** The method for manufacture of the self-adhesive bundling band according to claim 3, **characterized in that** the anti-adherent print varnish (5') is of the polyurethane, nitrocellulose, silicone, styrene acrylic, phenoxy ethyl acrylate, trimethylolpropane triacrylate, polyester or epoxy acrylate type.

**5.** The method for manufacture of the self-adhesive bundling band according to claim 3, **characterized in that** the adhesive layer (2) is of the acrylic or polyurethane type, or styrene-butadiene, styrene-isoprene, butyl or nitrile rubbers, or silicone resins.

**6.** The method for manufacture of the self-adhesive bundling band according to claim 3, **characterized in that** at the same time that the overprinting with varnishes is performed, the perforation is made in order to facilitate a later dispensing.

**7.** The method for manufacture of the self-adhesive bundling band according to claim 3, **characterized in that** the adhesive layer (2) is continuous or discontinuous, in a cross pattern, line pattern or any other adhesive application pattern.
